# EUROPÄISCHE PATENTSCHRIFT

(11) **EP 3 578 320 B1**
(45) Veröffentlichungstag und Bekanntmachung des Hinweises auf die Patenterteilung: **15.09.2021**
(21) Anmeldenummer: 18176458.0
(22) Anmeldetag: 07.06.2018
(51) Int. Cl.: B25J 9/16, G05B 19/4061

(54) **KONFIGURIEREN EINER VON EINEM 3D-SENSOR ÜBERWACHTEN GEFAHRENSTELLE**
CONFIGURING A HAZARDOUS AREA MONITORED BY A 3D SENSOR
CONFIGURER UN ENDROIT DANGEREUX SURVEILLÉ PAR UN CAPTEUR TRIDIMENSIONNEL

(43) Veröffentlichungstag der Anmeldung: 11.12.2019
(73) Patentinhaber: SICK AG, 79183 Waldkirch (DE)
(72) Erfinder: Hornung, Armin, 79312 Emmendingen (DE); Neubauer, Matthias, 79102 Freiburg (DE); Braune, Ingolf, 79194 Gundelfingen (DE); MacNamara, Shane, 79285 Ebringen (DE); Neumann, Thomas, 79227 Schallstadt (DE)

(56) Entgegenhaltungen:
- EP-A1- 3 142 088
- EP-A1- 3 189 947
- EP-B1- 2 048 557
- DE-A1-102005 063 217
- DE-A1-102012 007 242

## Beschreibung

Die Erfindung betrifft ein Verfahren und eine Vorrichtung zum Konfigurieren einer von einem 3D-Sensor zu überwachenden Gefahrenstelle nach dem Oberbegriff von Anspruch 1 beziehungsweise 14.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

In der sicherheitstechnischen Überwachung von Robotern besteht ein zunehmender Wunsch nach engerer Zusammenarbeit mit Personen (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Schutzfelder und Sicherheitsabstände möglichst klein und eventuell sogar situationsangepasst konfiguriert werden, natürlich unter der Vorgabe, dass die Sicherheit gewährleistet bleibt. Die Normen ISO13854, ISO 13855, ISO 13857 befassen sich mit der Festlegung von Sicherheitsabständen.

Eine Bewertung von Objekten und Maschinen bezüglich Geschwindigkeit und gegenseitiger Entfernung wird in den genannten Roboternormen als "Speed and Separation Monitoring" bezeichnet. Dabei wird zweckmäßigerweise nicht der Abstand zu der Maschine selbst berechnet. Das wäre zu komplex und dynamisch, und es soll auch ein ausreichender Sicherheitsabstand zu künftigen Maschinenpositionen eingehalten werden. Deshalb ist es sinnvoll, eine Gefahrenstelle zu konfigurieren, welche die Maschine umgibt.

Nach den dafür bekannten Verfahren wird aber der Einrichter nicht dahingehend unterstützt, ob die Konfiguration sicher ist. Werden jedoch Verdeckungen und Abschattungen ignoriert, die eine konfigurierte Gefahrenstelle verursacht, so kann darunter die Sicherheitsfunktion leiden, weil Objekte aus der Perspektive des überwachenden Sensors nicht zu sehen sind oder plötzlich in der Gefahrenstelle verschwinden. Der Einrichter wird mit der Verantwortung allein gelassen, dass eine Konfiguration die gewünschte Sicherheit bietet.

Die DE10 2005 063 217 B4 offenbart ein Verfahren zum Konfigurieren von Schutzfeldern für eine Stereokamera. Dazu wird ein dreidimensionales Abbild des Raumbereichs aufgenommen und angezeigt, und darin werden in einer Art CAD-Umgebung Volumina definiert, die als Schutzfelder überwacht werden sollen. Es findet aber dann keine automatische Überprüfung statt, ob der Sensor diese Schutzfelder tatsächlich erfassen kann. Außerdem stellt es unterschiedliche Anforderungen an die Konfiguration, ob erkannt werden soll, wenn ein Objekt in ein Raumvolumen wie ein Schutzfeld eingetreten ist, oder ob der Abstand zu einem Raumvolumen wie einer Gefahrenstelle zu bestimmen ist.

In der DE 10 2012 007 242 A1 wird ein Gefahrenbereich um einen Roboter mit einem Erkennungssystem überwacht. Der Begriff Gefahrenbereich bezeichnet dort aber eigentlich ein Schutzfeld, denn es ist erlaubt, sich dem Gefahrenbereich beliebig zu nähern, nur nicht ihn zu betreten. Eine Konfiguration des Gefahrenbereichs findet nicht statt, er passt sich vielmehr dynamisch den Bewegungen des Roboters oder einer Person in dessen Umfeld an. Es wird nicht automatisch geprüft, inwiefern der Gefahrenbereich jeweils von dem Erkennungssystem erfassbar ist.

Die EP 2 023 160 B1 offenbart eine dreidimensionale Raumüberwachung mit einem Konfigurationsmodus zum Bestimmen der Schutzfelder anhand von visuellen Markern. Dabei werden Bewegungsabläufe einer Gefahrenquelle überwacht, und daraus wird automatisch ein Schutzfeld konfiguriert. Folglich geht es auch hier um Schutzfelder, nicht Gefahrenstellen, und es findet keine automatische Überprüfung statt, ob die Schutzfelder tatsächlich überwacht werden können.

Bei einer Konfiguration eines optoelektronischen Sensors nach EP 2 048 557 B1 werden Schutzfeldgrenzen mit einem Handgerät vorgegeben, wobei geprüft wird, ob das Handgerät jeweils von dem Sensor gesehen wird. Das betrifft erneut Schutzfelder und nicht Gefahrenstellen, und es funktioniert nicht virtuell in einer 3D-Umgebung, sondern nur im tatsächlichen Überwachungsbereich. Die Verdeckung beziehungsweise Abschattung durch eine Gefahrenstelle um die zu überwachende Maschine bleibt unberücksichtigt, denn darüber kann die Sichtbarkeit des Handgeräts während des Konfigurierens nicht ausreichend Auskunft geben.

Die US 6 829 371 B1 befasst sich mit einem automatischen Einrichten eines optischen Sicherheitsvorhangs anhand eines Grenzmusters für ein Schutzfeld in der Szenerie. Abgesehen davon, dass es wiederum um Schutzfelder und nicht Gefahrenstellen geht, wird durch solche zweidimensionalen Grenzen die dreidimensionale Situation nicht ausreichend bewertet.

Nach der US 9 043 025 B2 wird die Arbeitsgeschwindigkeit eines Roboters verringert, wenn sich eine Person in einer Gefahrenzone um den Roboter befindet. Das ist wieder ein anderes Begriffsverständnis einer Gefahrenzone, die einem Schutzfeld entspricht. Außerdem äußert sich die US 9 043 025 B2 nicht zur Konfiguration der Gefahrenzone oder gar deren Überprüfung hinsichtlich ihrer sicheren Erfassbarkeit.

Die US 2015/0217455 A1 verfolgt Objekte in der Umgebung eines Roboters, der reagieren soll, wenn dort ein neues, zuvor noch nicht erfasstes Objekt, auftaucht. Die Problematik der Verdeckung durch den Roboter wird nicht diskutiert.

Die EP 3 112 900 A1 offenbart ein Sicherheitssystem, welche das von einem erfassten Objekt eingenommene Volumen schätzt und einer Risikobewertung zugrunde legt. Das betrifft das zu detektierende Objekt, also die Person, und nicht die zu überwachende Maschine.

In der US 2016/0140397 A1 werden zweidimensionale Videodaten und Tiefendaten ausgewertet, um Objekte zu verfolgen und Ereignisse zu detektieren, wobei aber keine Schutzfelder oder Gefahrenstellen konfiguriert werden.

Die US 2016/0207198 A1 stellt ein Verfahren zum Verifizieren von Sicherheitsbereichen vor. Dabei werden die Sicherheitsbereiche in einer Augmented-Reality-Darstellung auf einem Mobilgerät angezeigt. Das kann dem Einrichter helfen, die Sicherheitsbereiche zu beurteilen, belässt aber die Verantwortung ansonsten vollständig bei ihm. Außerdem fehlt es an jeglichen Ausführungen zu der Frage, inwieweit die Sicherheitsbereiche durch einen Sensor überwachbar sind.

Die EP 2 275 990 B1 befasst sich mit Lücken in der Tiefenkarte. Es erfolgt ein sicherheitsgerichteter Abschaltbefehl, wenn es Lücken oder zusammenhängende Pixelbereiche ohne Lücken gibt, die jeweils größer sind als das kleinste zu detektierende Objekt, wobei die Größe einer Lücke unter Annahme des schlechtesten Falls an den Rand projiziert wird. Das ist eine zusätzliche Sicherheitsmaßnahme, die aber nichts mit dem Konfigurieren von Schutzfeldern oder Gefahrenstellen zu tun hat.

Die EP 3 200 122 A1 offenbart einen 3D-Sensor mit sicherer Erkennung von Objekten, bei dem die Tiefenkarte mit einem feinen und einem groben Detektionsvermögen ausgewertet wird. Fein erfasste Objekte innerhalb einer Umgebung eines grob erfassten Objekts werden diesem zugeschlagen, isolierte fein erfasste Objekte als Störung ignoriert. Das ermöglicht, nachgelagert bestimmte kleine Objekte noch als nicht sicherheitsrelevant auszufiltern, hat aber ebenfalls keinen direkten Zusammenhang mit dem Konfigurieren von Schutzfeldern oder Gefahrenstellen.

Die EP 3 142 088 A1 offenbart ein Verfahren zum Einstellen von mehreren Teilbereichen eines gewünschten Schutzbereichs. Ein vorgegebenes Schutzfeld wird automatisch so aufgeteilt, dass es lückenlos von mehreren Laserscannern aus verschiedenen Perspektiven überwacht wird.

Aus der EP 3 189 947 A1 ist ein Verfahren zum Konfigurieren und zum Betreiben einer überwachten, automatisierten Arbeitszelle bekannt. Dabei werden aus von der überwachten Maschine übergebenen Arbeitsraumdaten Schutzraumdaten bestimmt, und der dadurch definierte Schutzraum wird von der Überwachungseinrichtung überwacht.

Es ist daher Aufgabe der Erfindung, das Konfigurieren von Gefahrenstellen für deren 3D-Überwachung zu verbessern.

Diese Aufgabe wird durch ein Verfahren und eine Vorrichtung zum Konfigurieren mindestens einer von mindestens einem 3D-Sensor zu überwachenden Gefahrenstelle nach Anspruch 1 beziehungsweise 14 gelöst. Die Gefahrenstelle sichert mindestens eine Maschine ab und wird von dem 3D-Sensor überwacht, damit niemand von der Maschine verletzt wird. Dazu liegt bevorzugt die Maschine zumindest teilweise in der Gefahrenstelle. Eine Gefahrenstelle ist ein durch seine Außenflächen bestimmtes Volumen, also ein 3D-Raumbereich. Gefahrenstellen können auch aus mehreren überlappenden oder disjunkten Volumina zusammengesetzt sein. Durch das erfindungsgemäße Konfigurieren werden die Außenflächen festgelegt, bevorzugt durch Erstellen eines Datensatzes, welcher die konfigurierte Gefahrenstelle beschreibt und welchen der 3D-Sensor oder ein übergeordnetes System für die Überwachung verwendet.

Die Außenflächen sind deshalb entscheidend, weil im Betrieb überwacht wird, ob sich eine Person der Maschine gefährlich annähert, und dafür kommt es auf den Grenzbereich an. Selbstverständlich kann dennoch direkt ein 3D-Körper konfiguriert werden, der das Festlegen seiner Außenflächen impliziert. Insbesondere geht es um die lateralen Seitenflächen, die durch ausreichende Dimensionierung ein Unterkriechen und Übergreifen verhindern. Dabei wird sprachlich von einer bevorzugten Montage des 3D-Sensors in Vogelperspektive ausgegangen, ohne die Erfindung tatsächlich darauf zu beschränken.

Die Erfindung geht von dem Grundgedanken aus, dass mit dem Konfigurieren sichergestellt wird, dass die Gefahrenstelle für eine sichere Überwachung geeignet ist. Dazu wird überprüft, ob Außenflächen von mindestens einem 3D-Sensor einsehbar sind. Es können alle Außenflächen geprüft werden, bevorzugt aber nur eine Teilmenge davon, beispielsweise die lateralen Seitenflächen. Allgemein können überwachte Außenflächen als Teilmenge der Außenflächen festgelegt werden, sei es durch Automatismus oder Benutzereingabe, und die überwachten Außenflächen sind diejenigen, die auf Einsehbarkeit geprüft werden. Andere Außenflächen werden beispielsweise mechanisch abgesichert und sind deshalb keine überwachten Außenflächen.

Dabei bedeutet einsehbar eine freie Sicht im Sinne einer vollflächigen, direkten Überwachungsmöglichkeit. Eine aus Perspektive des 3D-Sensors rückwärtige Außenfläche dagegen kann in gewissem Sinne durch die Gefahrenstelle hindurch auch beobachtet werden, aber das ist gerade nicht einsehbar im erfindungsgemäßen Sinne, weil die Maschine die Sicht in recht unvorhersehbarer Weise behindert. Es reicht folglich keineswegs aus, wenn sich eine Außenfläche irgendwie im Sichtfeld befindet. Der 3D-Sensor beziehungsweise ein Verbund aus mehreren 3D-Sensoren, die einander in Sichtbereich und/oder Perspektive ergänzen, kann also mit erfindungsgemäß konfigurierten Gefahrenstellen seine Aufgabe verlässlich wahrnehmen.

Die Erfindung hat den Vorteil, dass mit den so konfigurierten Gefahrenstellen Sicherheitsprobleme durch Verdeckung beziehungsweise Abschattung von vorneherein vermieden werden. Der Einrichter wird automatisch unterstützt und kann keine in diesem Sinne unzulässigen Gefahrenstellen konfigurieren oder erhält zumindest einen deutlichen Hinweis auf mögliche Sicherheitsprobleme. In diesem Rahmen bleibt eine große Flexibilität der konfigurierbaren Gefahrenstellen gewahrt. Dadurch sind eng an die eigentliche Gefahr anliegende Gefahrenstellen möglich, bei denen die Verfügbarkeit des Systems hoch bleibt und Abstände von Objekten nicht zu stark unterschätzt werden. Das Verfahren ist auch für mehrere Gefahrenstellen zur Absicherung komplexer Maschinen und Anlagen und/oder mehrere 3D-Sensoren geeignet, die einander im Verbund ergänzen

Der 3D-Sensor ist vorzugsweise eine 3D-Kamera, die zunächst jede bekannte Technik verwenden kann, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera aber ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Auch ein Laserscanner ist ein 3D-Sensor, denn er erzeugt 3D-Punktwolken, die bei einem klassischen Laserscanner auf eine Abtastebene beschränkt sind. Durch in Elevation bewegte Abtastung oder mehrere in Elevation versetzte Abtaststrahlen entfällt diese Beschränkung bei einem Laserscanner. Hybridanordnungen mit unterschiedlichen 3D-Sensoren oder sonstigen Sensoren, wie einem Lichtgitter, sind ebenfalls denkbar.

Vorzugsweise wird zum Konfigurieren von Außenflächen mindestens ein Polygonzug auf einer Grundfläche vorgegeben, insbesondere ein geschlossener Polygonzug, und daraus ein Prisma mit senkrechten Außenflächen erzeugt. Die Vorgabe des Polygonzuges auf der Grundfläche ist nur eine sprachliche Vereinfachung, da der Polygonzug bei einem Prisma mit senkrechten Seitenflächen in jeder Höhe derselbe ist. Über einen Polygonzug beziehungsweise ein daraus automatisch erzeugbares Prisma wird ein guter Kompromiss gefunden, der zugleich flexible, ausreichend komplexen Konfigurationsmöglichkeiten für Gefahrenstellen erlaubt und dabei sicherheitstechnisch wesentlich besser beherrschbar ist als ein beliebiges 3D-Volumen. Auch für den Einrichter sind solche durch Prismen mit senkrechten Seitenflächen beschriebene Gefahrenstellen leichter nachvollziehbar und testbar. Das Prisma ist vorzugsweise kein Quader und/oder keine Dreieckssäule. Zwar sollen solche einfachen Gefahrenstellen ausdrücklich konfigurierbar und keineswegs verboten sein. Es geht nur um ein optionales eingeschränktes Begriffsverständnis eines Polygonzugs und des dadurch festgelegten Prismas, das tatsächlich von den flexibleren und komplexeren Gestaltungsmöglichkeiten Gebrauch macht. Gefahrenstellen können aus mehreren Prismen zusammengesetzt sein, die über mehrere Polygonzüge vorgegeben werden.

Eine Außenfläche kann von einem 3D-Sensor eingesehen werden, wenn der 3D-Sensor bezüglich der Ebene, in der die Außenfläche liegt, jenseits der Gefahrenstelle angeordnet ist. Dies ist eine vorteilhafte und einfach überprüfbare Bedingung, wann eine Außenfläche einsehbar ist. Es genügt, wenn ein 3D-Sensor in einem Verbund mehrerer 3D-Sensoren diese Bedingung erfüllt. Die Außenfläche wird in alle Richtungen ausgedehnt, um eine Ebene zu bilden. Auf der einen Seite dieser Ebene liegt die Gefahrenstelle selbst, das ist gleichsam innen. Befindet sich der 3D-Sensor auf der anderen Seite, also außen, so kann davon die gesamte Außenfläche frei eingesehen werden. Formal kann der Normalenvektor zu der Außenfläche bestimmt und mit einem Vektor von der Position des 3D-Sensors zu der Außenfläche verglichen werden. Sie sollten einander entgegengesetzt orientiert, also beispielsweise das Vorzeichen ihres Skalarprodukts negativ sein. Diese Betrachtung kann auch in nur zwei Dimensionen in einer senkrechten Projektion auf eine Ebene parallel zu der Grundfläche erfolgen.

Gefahrenstellen dürfen vorzugsweise nur mit Kontakt zum Boden konfiguriert werden. Kontakt zum Boden ist hier vorzugsweise im Sinne der Normen zu verstehen, so dass ein Unterkriechen und ein Zugang vom Boden her unmöglich sind. Ein kleiner Abstand zum Boden insbesondere entsprechend dem Detektionsvermögen des 3D-Sensors kann verbleiben, da dies sicherheitstechnisch nicht relevant ist. Eine konkrete Größe für einen derartigen normgerechten, unbedenklichen Abstand zum Boden ist 300 mm. Bei Gefahrenstellen mit Kontakt zum Boden, auch in dem genannten erweiterten Sinne, muss keine Abschattung nach unten berücksichtigt werden. Werden alternativ doch schwebende Gefahrenstellen zugelassen, so wird vorzugsweise der Gefahrenstelle deren projektiver Abschattungsbereich zugeschlagen. Der projektive Abschattungsbereich ist der Bereich, der für einen 3D-Sensor aus dessen Zentralperspektive durch die Gefahrenstelle abgeschattet ist. Wie später noch ausgeführt, ist ein großer Vorteil erfindungsgemäß konfigurierter Gefahrenstellen, dass Abstände ohne Berücksichtigung projektiver Abschattungen der Gefahrenstelle bestimmt werden können. Das geht aber nur, wenn die Gefahrenstelle mit Kontakt zum Boden konfiguriert ist, bei einer schwebenden Gefahrenstelle muss die Sicherheit durch Berücksichtigung des projektiven Schattens wiederhergestellt werden.

Vorzugsweise wird eine Außenfläche, die nicht von mindestens einem 3D-Sensor eingesehen wird, während des Konfigurierens gekennzeichnet oder gar nicht zugelassen. Das erleichtert dem Einrichter seine Aufgabe erheblich, da es gar nicht erst zum Konfigurieren von ungültigen Gefahrenstellen kommt. Es kann aber die Möglichkeit nicht aktivierter Außenflächen einer Gefahrenstelle geben, d. h. von Außenflächen, für deren Absicherung ein zusätzlicher 3D-Sensor oder eine andere Maßnahme wie eine physische Absperrung oder ein Lichtgitter erforderlich ist. Solche Sicherheitsprobleme oder Lücken in der Überwachung sind für den Einrichter sofort erfassbar.

Beim Konfigurieren einer nicht von mindestens einem 3D-Sensor eingesehenen Außenfläche wird bevorzugt automatisch eine alternative Außenfläche vorgeschlagen. Das ist beispielsweise eine Außenfläche, die einsehbar ist, und minimalen Abstand zu einer unzulässigen, nicht einsehbaren Außenfläche hat, die der Einrichter vorgibt. Damit gelangt der Einrichter besonders schnell zu einer alternativen, zulässigen Konfiguration, die seinem ursprünglichen Plan nahe kommt.

Beim Konfigurieren einer nicht von mindestens einem 3D-Sensor eingesehenen Außenfläche wird bevorzugt automatisch eine veränderte Perspektive eines 3D-Sensors oder eine Perspektive eines zusätzlichen 3D-Sensors vorgeschlagen, damit die Außenfläche dann eingesehen wird. In dieser Ausführungsform wird, um das Problem einer nicht einsehbaren Außenfläche zu beheben, nicht bei der Konfiguration der Gefahrenstelle angesetzt, sondern bei der 3D-Sensoranordnung. Sofern mit allen bisher konfigurierten Gefahrenstellen verträglich denkbar, wird eine neue Position und/oder Ausrichtung eines schon vorgesehenen 3D-Sensors verändert. Ansonsten wird ein zusätzlicher 3D-Sensor ergänzt, mit dessen Hilfe die Konfiguration möglich wäre. Funktionen wie der Vorschlag einer alternativen Außenfläche oder 3D-Sensor-Konfiguration werden vorzugsweise gesondert von dem Einrichter angefordert beziehungsweise sind abschaltbar, weil sie sonst vor allem zu Beginn einer Konfiguration sehr störend werden können.

Die Maschine wird vorzugsweise während ihrer Arbeitsbewegung beobachtet, um von der Gefahrenstelle zu umfassende Raumbereiche aufzufinden. Dadurch werden Ausgangsdaten bereitgestellt, die bei der Konfiguration der Gefahrenstelle unterstützen. Es ist danach bekannt, welche Raumbereiche von der Maschine mindestens zeitweise besetzt werden und welche nicht.

Die zu umfassenden Raumbereiche werden bevorzugt als Hilfestellung zum Konfigurieren der Gefahrenstelle dargestellt. Eine derartige Darstellung erfolgt beispielsweise durch Einblenden in einer Konfigurationssoftware oder durch Projektion in den tatsächlich überwachten Bereich. Der Einrichter kennt damit die Bereiche, die von der Maschine eingenommen werden, und kann die Gefahrenstelle daran anpassen.

Vorzugsweise wird anhand der zu umfassenden Raumbereiche automatisch eine Gefahrenstelle konfiguriert. Beispielsweise wird mit Hilfe des 3D-Sensors, alternativ eines anderen Sensors, eine kumulierte 3D-Punktwolke der Maschine über ihre Arbeitsbewegung erzeugt. Die 3D-Messpunkte werden auf den Boden projiziert, es wird ein umhüllender Polygonzug gebildet, und gegebenenfalls werden dessen Abschnitte noch zu einem der beobachtenden 3D-Sensoren hin gedreht, damit die entsprechende Außenfläche einsehbar wird. Je nach Position der 3D-Sensoren und Komplexität der Maschine und ihrer Arbeitsbewegung verbleiben dabei nicht einsehbare Außenflächen. Der Einrichter hat die Möglichkeit, dies in einer Nachbearbeitung durch Veränderungen der Konfiguration und/oder des 3D-Sensorverbundes weiter zu verbessern, ist sich aber jedenfalls sofort der noch bestehenden Sicherheitslücken bewusst.

Die mindestens eine konfigurierte Gefahrenstelle wird vorzugsweise von dem mindestens einen 3D-Sensor überwacht, wobei aus Messdaten des 3D-Sensors Objekte in einer Umgebung der Gefahrenstelle erfasst werden, der kürzeste Abstand zwischen Gefahrenstelle und Objekten bestimmt und mit dessen Hilfe entschieden wird, ob eine sicherheitsgerichtete Reaktion der Maschine in der Gefahrenstelle erfolgt. So wird die erfindungsgemäß konfigurierte Gefahrenstelle in einer Sicherheitsanwendung genutzt. Sind mehrere Gefahrenstellen konfiguriert, so wird vorzugsweise für jede Gefahrenstelle der kürzeste Abstand zu einem von dem 3D-Sensor erfassten Objekt bestimmt. In einem 3D-Sensor-Verbund werden Erfassungsdaten geeignet fusioniert. Das kann insbesondere erst auf der Verarbeitungsstufe kürzester Abstände geschehen, jeder 3D-Sensor arbeitet dann bis zu einem sehr späten Verarbeitungsstadium weitgehend autark. Alternativ können auch bereits die Messdaten vereinigt und gemeinsam ausgewertet werden.

Vorzugsweise werden von dem 3D-Sensor nur die kürzesten Abstände sicherheitsgerichtet bereitgestellt, und die weitere Beurteilung erfolgt auf dieser Basis in einer angeschlossenen Steuerung. Die Steuerung ist dem 3D-Sensor und der überwachten Maschine oder den überwachten Maschinen übergeordnet, oder es handelt sich um die Steuerung der Maschine selbst. Die Steuerung wertet die von dem 3D-Sensor gelieferten Abstände aus und leitet gegebenenfalls eine sicherheitsgerichtete Reaktion ein. Beispiele für eine Absicherung sind ein Nothalt, ein Abbremsen, ein Ausweichen oder ein Verbringen in eine sichere Position. Es ist denkbar, einen festen Mindestabstand vorzugeben, der etwa unter worst-case-Annahmen an Geschwindigkeiten oder aus bekannten oder vermessenen Nachlaufwegen bestimmt ist. Es sind auch dynamische Sicherheitsabstände unter anderem in Abhängigkeit von der aktuellen Geschwindigkeit der Maschine und des Objekts denkbar. In die Sicherheitsbewertung können Daten der Steuerung der Maschine einfließen.

Herkömmlich wird über eine solche Ausgabeschnittstelle nur ein binäres Signal ausgegeben, ob eine Schutzfeldverletzung vorliegt (OSSD, Output Signal Switching Device). Nach dieser bevorzugten Ausführungsform werden nicht mehr Schutzfelder überwacht und auch nicht mehr durch den Sensor selbst binäre Absicherungssignale erzeugt und ausgegeben. Stattdessen wird die dafür erforderliche Information sicher, sehr kompakt und leicht zugänglich bereitgestellt. Der jeweils aktuelle kürzeste Abstand wird anstelle des bisher üblichen binären Absicherungssignals an der folglich nicht mehr als OSSD ausgestalteten sicheren Ausgabeschnittstelle für eine angeschlossene Steuerung zur Verfügung gestellt. Diese Steuerung, etwa die übergeordnete Steuerung einer Roboterzelle oder auch die Steuerung des Roboters selbst, kann anhand des kürzesten Abstands sehr einfach feststellen, ob eine Gefahr besteht, und übernimmt die eigentliche Absicherungsfunktion selbst.

Dabei wird das Arbeiten beziehungsweise die Kooperation mit Maschinen wesentlich flexibler gestaltbar und eine rasche, individuelle Reaktion auf Menschen im Umfeld der Maschine ermöglicht. Ein Eingriff in ein Schutzfeld lässt in der Regel nur noch einen Nothalt zu, da Schutzfelder gerade so definiert sind, dass in einem solchen Fall eine aufgrund des binären Abschaltsignals nicht mehr differenzierte Unfallgefahr besteht. Durch Überwachung von kürzesten Abständen sind jedoch auch mildere Eingriffe in den Prozessablauf möglich, die einen zeitaufwändigen Nothalt samt Wiederanlauf vermeiden und den Prozessablauf nach Möglichkeit ungestört weiterlaufen lassen oder die Annährung eines Menschen in den Prozessablauf integrieren. Arbeitsschritte der Maschine können dabei rechtzeitig umgeplant werden.

Der kürzeste Abstand wird vorzugsweise zu den Außenflächen bestimmt, ohne den projektiven Abschattungsbereich der Gefahrenstelle zu berücksichtigen. Das wäre im Allgemeinen nicht sicher. Der projektive Schatten ist ja gerade definiert als der Bereich, in dem der 3D-Sensor aufgrund der Abschattung durch die Gefahrenstelle aus seiner Zentralperspektive blind ist. Somit könnte sich ein Objekt bei Eintritt in den projektiven Schatten noch weit genug von der Gefahrenstelle sein und sich dann im projektiven Schatten ungesehen auf eine kritische Entfernung nähern. Die erfindungsgemäße Konfiguration der Gefahrenstelle schließt aber aus, dass dieser sicherheitskritische Fall je auftritt. Der projektive Schatten nimmt ein erhebliches Raumvolumen ein und hätte entsprechenden Einfluss auf die Verfügbarkeit, so dass es ein großer Vorteil ist, wenn darauf bei der Überwachung keine Rücksicht genommen werden muss.

Bei der Überwachung der Gefahrenstelle werden vorzugsweise Objekte in der Gefahrenstelle selbst ignoriert. Die Gefahrenstelle selbst wird also als frei von zu erfassenden Objekten angesehen, oder vielmehr als durch die Maschine blockiert. Tatsächlich wäre je nach Konfiguration durchaus Raum für solche Objekte. Auch bildet die Maschine natürlich selbst ein Objekt, das zunächst von dem 3D-Sensor erfasst wird. All das wird aber absichtlich ignoriert und die Gefahrenstelle als leerer, von Objekten freier Block modelliert. Das vereinfacht die Überwachung und die Bestimmung kürzester Abstände, denn die Dynamik der Maschine innerhalb der Gefahrenstelle spielt so keine Rolle. Sicherheitstechnisch ist dies auch unproblematisch, denn jedes Objekt wird rechtzeitig erkannt, wenn es sich der Gefahrenstelle nähert.

Zu der Gefahrenstelle gehört nicht nur deren projektiver Schatten auf der dem 3D-Sensor abgewandten Seite, sondern auch ein Verdeckungsbereich auf der zugewandten Seite zwischen 3D-Sensor und Gefahrenstelle. Wird nämlich die Gefahrenstelle in dem Sinne rechentechnisch vorteilhaft ausmaskiert, dass Sichtstrahlen in die Gefahrenstelle insgesamt ignoriert werden, so ist der 3D-Sensor auch in dem Verdeckungsbereich blind. Überraschenderweise ist das aber bei erfindungsgemäß konfigurierten Gefahrenstellen unkritisch, der Verdeckungsbereich muss nicht gesondert behandelt werden. Objekte in dem Verdeckungsbereich können vielmehr ohne Sicherheitseinbuße ignoriert werden. Ein Objekt, das sich der Gefahrenstelle nähert, berührt nämlich, je nach Höhe, durch den eigenen projektiven Schatten unten die Gefahrenstelle genau dann, wenn es oben den Verdeckungsbereich berührt. Die gefährliche Annäherung wird also immer rechtzeitig bemerkt.

Die Steuer- und Auswertungseinheit ist bevorzugt dafür ausgebildet, mindestens eine Zusatzinformation an der Ausgabeschnittstelle bereitzustellen, wobei die Zusatzinformation mindestens einen weiteren kürzesten Abstand zu anderen Abschnitten des nächsten Objekts oder anderen Objekten, eine Objektposition, eine Bewegungsrichtung, eine Geschwindigkeit, eine Objekthülle oder eine Objektwolke aufweist. Damit wird einer an den 3D-Sensor angeschlossenen Steuerung eine differenzierte Auswertung ermöglicht. Es ist beispielsweise denkbar, dass nicht ein langsames nächstes Objekt, sondern ein schnelles etwas ferneres Objekt die größte Gefahr darstellt. Der mindestens eine zusätzliche kürzeste Abstand sollte ein anderes Objekt oder zumindest einen klar separierten anderen Objektbereich betreffen, wie einen anderen Arm, da sonst nur unmittelbare Nachbarpunkte zum kürzesten Abstand betrachtet würden, deren Zusatzinformation wenig Neues beiträgt. Objektpositionen sind hier vorzugsweise repräsentativ, etwa ein Objektschwerpunkt oder derjenige Objektpunkt, zu dem der kürzeste Abstand berechnet wurde. Es ist aber auch denkbar, Hüllkörper zu Objekten oder die 3D-Punktwolke des Objekts auszugeben. Bei allen diesen Zusatzinformationen handelt es sich jeweils um Zwischenergebnisse, die beim Auffinden des kürzesten Abstands ohnehin erfasst wurden, oder sehr leicht daraus ableitbare Größen, die den Aufwand nicht wesentlich erhöhen.

Der 3D-Sensor ist bevorzugt für ein Detektionsvermögen ausgelegt, bei dem Objekte ab einer Mindestgröße sicher erfasst werden. Das Detektionsvermögen ist eine spezifizierte Eignung eines im Sinne der einleitenden oder vergleichbarer Normen sicheren Sensors, Objekte einer Mindestgröße im gesamten Überwachungsbereich sicher zu erfassen. Die entsprechende Auslegung des 3D-Sensors betrifft seinen Aufbau, also seine Optik, seinen Lichtempfänger und weitere mögliche, noch nicht genannte Komponenten, wie etwa eine Beleuchtung, sowie die sichere Auswertung. Das Detektionsvermögen schließt erst einmal nicht aus, dass auch kleinere Objekte erfasst werden. Für Objekte, die kleiner sind als die Mindestgröße, ist aber der Schutz nicht garantiert, beispielsweise wird ein Finger bei einem für Armschutz ausgelegten 3D-Sensor nicht sicher erfasst. Deshalb werden Objekte kleiner als die Mindestgröße möglicherweise mittels Filtern in der Auswertung ausgeschlossen. Es ist auch möglich, eine Mindestgröße oberhalb des Detektionsvermögens zu wählen, also eine an sich bereitgestellte Auflösung nicht auszunutzen. Als Zahlenbeispiele seien 14 mm für Fingerschutz oder im Bereich von 30-80 mm für den Schutz von Extremitäten genannt, insbesondere 55 mm für Oberarmschutz.

Eine Vorrichtung zum Konfigurieren mindestens einer von mindestens einem 3D-Sensor zu überwachenden Gefahrenstelle weist eine Eingabeeinrichtung, eine Steuer- und Auswertungseinheit sowie eine Anzeige auf, wobei die Steuer- und Auswertungseinheit dafür ausgebildet ist, aufgrund von Eingaben der Eingabeeinrichtung Außenflächen der Gefahrenstelle festzulegen und auf der Anzeige darzustellen, um die Gefahrenstelle mit einem erfindungsgemäßen Verfahren zu konfigurieren. Die Konfiguration erfolgt mit Hilfe einer Software, die in einem 3D-Sensor, einem daran angeschlossenen System oder einem Konfigurationssystem dafür abläuft. Die Konfiguration kann auf einem üblichen Bildschirm, aber auch mittels virtueller Realität oder durch Überblenden von tatsächlicher und virtueller Information (augmented reality) erfolgen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereichs;
- Fig. 2: eine beispielhafte Draufsicht auf Gefahrenstellen um abzusichernde Maschinen;
- Fig. 3: eine dreidimensionale Ansicht für die Situation der Figur 2;
- Fig. 4: eine schematische Seitenansicht des Sichtbereichs einer 3D-Kamera mit zwei beispielhaften Gefahrenstellen zur Erläuterung verschiedener Abstände zu einem Objekt;
- Fig. 5: eine weitere schematische Seitenansicht des Sichtbereichs einer 3D-Kamera zur Erläuterung von Verdeckungen und Abschattungen;
- Fig. 6: eine dreidimensionale Ansicht einer beispielhaften Konfiguration einer Gefahrenstelle mit den von einem 3D-Sensor einsehbaren Außenflächen;
- Fig. 7: eine dreidimensionale Ansicht, in welcher die Konfiguration der Gefahrenstelle gemäß Figur 6 verändert wurde, um einen zusätzlichen Teil einer Außenfläche einsehbar zu machen;
- Fig. 8: eine Draufsicht auf eine Konfiguration einer Gefahrenstelle mittels eines Polygonzugs auf einer Grundfläche;
- Fig. 9: eine Draufsicht gemäß Figur 8 mit einer zusätzlichen Halbebene, anhand derer die Einsehbarkeit einer Außenfläche geprüft wird;
- Fig. 10: eine weitere schematische Seitenansicht des Sichtbereichs einer 3D-Kamera zur Diskussion von schwebenden Gefahrenstellen;
- Fig. 11a-b: schematische Seitenansichten des Sichtbereichs einer 3D-Kamera zur Diskussion eines Verdeckungsbereichs zwischen Gefahrenstelle und 3D-Kamera;
- Fig. 12: eine dreidimensionale Ansicht auf Gefahrenstellen um abzusichernder Maschinen, die Verdeckungs- und Abschattungsbereiche einschließen.

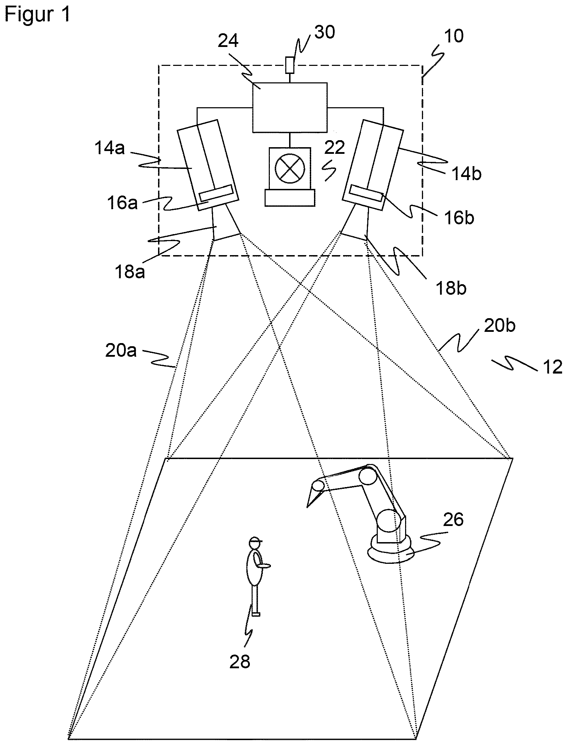

Figur 1 zeigt in einer schematischen dreidimensionalen Darstellung den allgemeinen Aufbau einer Stereokamera 10 zur Aufnahme einer Tiefenkarte. Die Stereokamera 10 ist nur ein Beispiel für einen erfindungsgemäßen 3D-Sensor, an dem die Erfassung von 3D-Bilddaten erläutert wird. Ebenso denkbar wären andere 3D-Kameras mit Erfassungsprinzipien wie Korrelation von Bild und projizierten Beleuchtungsmustern oder Bestimmung der Lichtlaufzeit sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Stereokamera 10 ist für die sichere Detektion eines Objekts im Personenschutz vorzugsweise fehlersicher im Sinne von Sicherheitsnormen wie den einleitend genannten ausgelegt, insbesondere nach IEC 61496-4-3.

Für die Auswertung, wo sich ein als Person dargestelltes Objekt 28 in Bezug auf die Maschine 26 befindet, wird die Tiefenkarte in der Steuer- und Auswertungseinheit 24 vorzugsweise zunächst einigen Vorverarbeitungsschritten unterzogen, beispielsweise eine Ausblendung des bekannten Hintergrunds. Dann wird eine Erkennung der Objekte 28 im Raumbereich 12 durchgeführt, wobei Forderungen an relevante Objekte 28 gestellt sein können, etwa eine Mindestgröße entsprechend einem geforderten Detektionsvermögen. Auch Filter anhand eines Körpermodells für mehr Robustheit sind denkbar, etwa in der Form, dass wie in EP 3 200 122 A1 fein erfasste Objekte nur relevant sind, wenn sie sich in der Nähe eines grob erfassten Objekts befinden.

Anschließend wird unter den verbleibenden Objekten 28 der kürzeste Abstand von der Maschine 26 zum nächsten Objekt berechnet. Bei der Abstandsberechnung wird der projektive Schatten des Objekts 28 berücksichtigt, beispielsweise indem der abgeschattete Bereich vorsichtshalber als durch ein Objekt belegt angenommen wird. Damit wird verhindert, dass ein sicherheitsrelevantes Objekt 28 in einem aus der Zentralperspektive der Stereokamera 10 nicht sichtbaren Abschattungsbereich übersehen wird. Der jeweils aktuelle kürzeste Abstand wird zyklisch oder azyklisch an einer sicheren Schnittstelle 30 bereitgestellt. Typische Ausgaberaten sind mehrmals pro Sekunde, es ist aber auch eine seltenere Aktualisierung denkbar, je nach geforderter und möglicher Ansprechzeit der Stereokamera 10.

Eine nicht dargestellte, an der sicheren Schnittstelle 30 angeschlossene übergeordnete Steuerung, insbesondere diejenige der Maschine 26, wertet den kürzesten Abstand zur Erfüllung einer Sicherheitsfunktion aus, zum Beispiel eines Speed-and-Separation Monitoring nach ISO/TS 15066, und vergleicht dazu den kürzesten Abstand mit einem erforderlichen Sicherheitsabstand etwa nach ISO 13855. Es wird dann erforderlichenfalls abhängig von dem kürzesten Abstand der nächste Arbeitsschritt der Maschine 26 neu geplant oder im Gefährdungsfall eine sicherheitsgerichtete Reaktion eingeleitet, um beispielsweise die Maschine 26 anzuhalten, abzubremsen oder ausweichen zu lassen, so dass durchgehend der erforderliche Sicherheitsabstand zwischen Mensch und Maschine gewahrt bleibt oder die Maschine in einen sicheren Zustand versetzt wird. Die Reaktion kann neben dem kürzesten Abstand von weiteren Bedingungen wie den Geschwindigkeiten oder der Beschaffenheit von Objekt 28 und Maschinenbereich 26 der drohenden Kollision abhängen.

Nach der bisherigen Erläuterung wird die Maschine 26 selbst beobachtet und zu ihr der kürzeste Abstand bestimmt. Das geschieht aber in der Praxis aufgrund der unter Umständen sehr komplexen Gestalt und Dynamik nicht. Stattdessen wird die Maschine 26 erfindungsgemäß als sogenannte Gefahrenstellen modelliert.

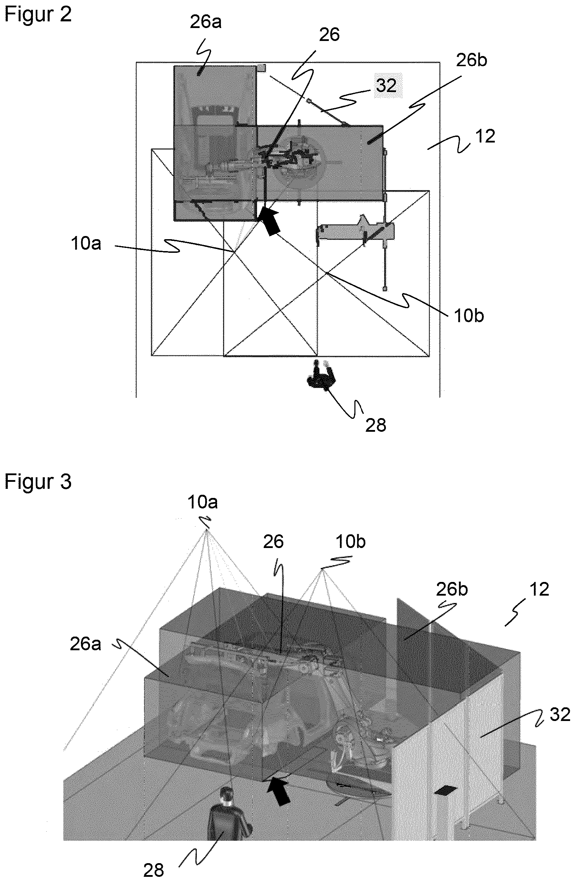

Die Figuren 2 und 3 zeigen dazu eine beispielhafte Szenerie in einer Draufsicht beziehungsweise dreidimensionalen Darstellung. Die Überwachung erfolgt hier beispielhaft durch einen Sensorverbund aus zwei 3D-Sensoren 10a-b, beispielsweise Stereokameras wie zu Figur 1 erläutert, die nur durch ihre jeweiligen Sichtfeldpyramiden dargestellt sind. Die Verwendung zweier 3D-Sensoren 10a-b ist beispielhaft, es kann stattdessen ein Einzelsensor oder ein größerer 3D-Sensorverbund eingesetzt werden, um das Sichtfeld zu erweitern oder zusätzliche Perspektiven zu gewinnen. Die 3D-Sensoren 10a-b sichern nur nach vorne hin ab, eine physische Barriere 32 verhindert den Zugang von rechts. Hinten und links können Wände, weitere physische Barrieren, 3D-Sensoren oder beispielsweise Lichtgitter die Absicherung vervollständigen.

Um die Maschine 26 herum sind beispielhaft zwei Gefahrenstellen 26a-b konfiguriert. Die Gefahrenstellen 26a-b sind Raumbereiche, in denen die Maschine 26 in einem jeweiligen Zeitabschnitt Arbeitsbewegungen ausführt. Die Gefahrenstellen 26a-b können die Maschine 26 mit etwas Abstand umgeben, um den Arbeitsbewegungen ausreichend Spiel zu lassen. Außerdem ist es für die Berechnungen vorteilhaft, geometrisch einfache Gefahrenstellen 26a-b zu definieren, wofür dann gewisse Leerräume in Kauf genommen werden. Wie auch in den Figuren 2 und 3 umgeben bei Bedarf mehrere Gefahrenstellen 26a-b mehrere Maschinen 26 und/oder mehrere bewegliche Teilabschnitte einer Maschine 26. Gefahrenstellen 26a-b können starr sein und sämtlich denkbaren Arbeitsbewegungen umfassen. Alternativ sind jeweils Gefahrenstellen 26a-b für Teilabschnitte der Arbeitsbewegung definiert, die in einer dem Prozess entsprechenden Abfolge benutzt werden und die kleiner und besser angepasst sind.

Eine Gefahrenstelle 26a-b selbst wird vorzugsweise als frei von zu erfassenden Objekten 28 angesehen, oder vielmehr als durch die Maschine 26 blockiert. Tatsächlich wäre je nach Hüllkörper, der die Maschine 26 als Gefahrenstelle 26a-b modelliert, darin durchaus Raum für Objekte 28. Auch bildet die Maschine 26 natürlich selbst ein Objekt 28, das zunächst von den 3D-Sensoren 10a-b erfasst wird. Die Unterscheidung zwischen Maschine 26 und Objekt 28 innerhalb der Gefahrenstelle 26a-b wäre aber ausgesprochen schwierig und fehleranfällig, mit dem Ergebnis, dass der Abstand der Maschine 26 zu sich selbst berechnet wird und daraufhin eine unnötige Sicherheitsreaktion erfolgt. Indem vorzugsweise schon für die Objekterkennung die Gefahrenstelle 26a-b samt projektiven Verdeckungs- und Abschattungsbereichen ausmaskiert wird, spielt die Dynamik der Maschine 26 innerhalb der Gefahrenstelle 26a keine Rolle. Sicherheitstechnisch ist dies unproblematisch, denn jedes Objekt 28 wird rechtzeitig erkannt, wenn es sich einer Gefahrenstelle 26a-b nähert.

Für eine effiziente und sichere Überwachung bestehen nun allerdings einige Anforderungen an die Konfiguration einer Gefahrenstelle 26a-b. Im Beispiel der Figuren 2 und 3 etwa entsteht für den linken 3D-Sensor 10a an der rechten Seite der Gefahrenstelle 26a, mit einem Pfeil bezeichnet, ein nicht einsehbarer Bereich, der durch die Gefahrenstelle 26a abgeschattet ist. Die Konfiguration der Gefahrenstellen 26a-b und des Sensorverbunds der 3D-Sensoren 10a-b muss gewährleisten, dass kein Objekt 28 unerkannt, ohne rechtzeitige sichere Reaktion, in eine Gefahrenstelle 26a-b gelangt. Im Fall der mit Pfeilen bezeichneten kritischen Stelle ist dies gelöst, indem hier der rechte 3D-Sensor 10b mit einer dafür günstigeren Perspektive die Überwachung übernimmt.

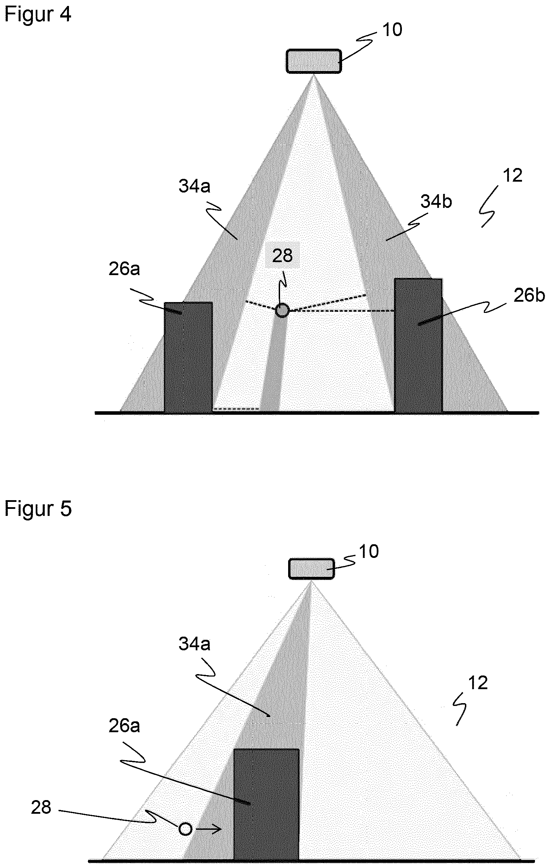

Nachfolgend wird nun unter Bezugnahme auf die Figuren 4 bis 11 erläutert, welche diversen problematischen Konstellationen auftreten können und wie sie durch eine erfindungsgemäße Konfiguration gelöst werden. Die Konfiguration findet in einem Software-Tool statt, welches beispielsweise die Szenerie in einer Liveaufnahme oder einer Aufbereitung darstellt und ähnlich wie in einem Zeichen- oder CAD-Programm die Definition von geometrischen Strukturen für Gefahrenstellen 26a-b erlaubt. Aufwändigere Konfigurationen in virtueller Realität oder Überblendung von realer Szenerie und künstlichen Informationen (augmented reality) sind auch vorstellbar. Es wird vereinfachend von gemeinsamen Weltkoordinaten ausgegangen, über die sich die 3D-Sensoren 10a-b und das Software-Tool einig sind. Dazu ist eine an sich bekannte anfängliche Registrierung oder Kalibrierung der 3D-Sensoren 10a-b erforderlich, um die benötigten Transformationsvorschriften aufzufinden. Die 3D-Sensoren 10a-b können im Betrieb in einem eigenen Koordinatensystemen arbeiten, wobei die konfigurierten Gefahrenstellen 26a-b mittels der während der Registrierung gewonnenen Transformationen umgerechnet werden. Die 3D-Sensoren 10a-b beobachten die Szenerie jeweils von oben, beispielsweise durch Montage an der Decke. Das ist besonders vorteilhaft, aber nicht zwingend erforderlich. Es können auch im Sensorverbund verschiedene Perspektiven genutzt werden, um Abschattungsbereiche effektiv zu reduzieren.

Figur 4 zeigt eine schematische Seitenansicht des von einem 3D-Sensor 10 erfassten Raumbereichs 12 mit zwei beispielhaften Gefahrenstellen 26a-b. Mit gestrichelten Linien sind verschiedene mögliche kürzeste Abstände zu den Gefahrenstellen 26a-b und deren sich aus der Ausmaskierung der Gefahrenstellen 26a-b ergebenden projektiven Verdeckungs- und Abschattungsbereichen 34a-b eingezeichnet. Wird bei der Abstandsberechnung der projektive Abschattungsbereich 34a-b berücksichtigt, so wird der Abstand unterschätzt, was möglicherweise zu unnötigen Sicherheitsreaktionen und damit einer Beeinträchtigung der Verfügbarkeit führt. Daher sollen vorzugsweise Abstände immer direkt zu der Gefahrenstelle 26a-b selbst berechnet werden. Damit daraus kein Sicherheitsproblem entsteht, muss dann aber gewährleistet werden, dass ein Objekt 28 nicht in dem projektiven Abschattungsbereich 34a-b verschwinden kann, ohne sich zuvor, vom 3D-Sensor 10 bemerkt, auf einen minimalen Abstand anzunähern.

Die Gefahr durch Verdeckung wird in Figur 5 nochmals deutlicher gezeigt. Ein Objekt 28 wird bei der durch einen Pfeil angedeuteten Bewegung aus Sicht des 3D-Sensors 10 hinter der Gefahrenstelle 26a in deren projektivem Abschattungsbereich 34a verschwinden. Der Abstand zu der senkrechten Außenfläche der Gefahrenstelle 26a ist aber noch recht groß und möglicherweise unkritisch. Die weitere kritische Annäherung geschieht dann unbemerkt in dem projektiven Abschattungsbereich 34a.

Um das zu verhindern, dürfen erfindungsgemäß Gefahrenstellen 26a-b nur so konfiguriert werden, dass die Außenflächen der Gefahrenstelle 26a-b zu mindestens einem 3D-Sensor 10 des überwachenden Sensorverbunds hin ausgerichtet sind. Für diesen 3D-Sensor 10 soll die gesamte Außenfläche direkt einsehbar sein, insbesondere ohne Sichtstrahl durch eine Gefahrenstelle 26a-b hindurch. Es ergeben sich dann keine Verdeckungen durch die Gefahrenstelle 26a-b, und der 3D-Sensor 10 kann den kürzesten Abstand zur konfigurierten Gefahrenstelle 26a-b ohne projektiven Abschattungsbereich 34a-b verwenden.

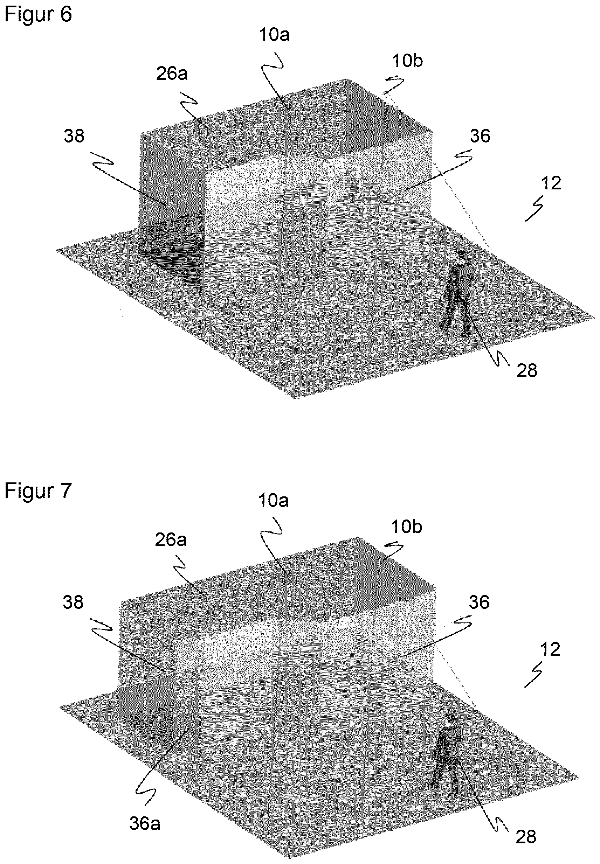

Figur 6 zeigt eine dreidimensionale Ansicht eines Beispiels einer in diesem Sinne zulässig konfigurierten Gefahrenstelle 26a. Die Außenflächen 36 der Gefahrenstelle 26a sind zu mindestens einem der 3D-Sensoren 10a-b beziehungsweise deren jeweiligem optischem Zentrum hin orientiert. Die erfindungsgemäße Konfiguration erzwingt solche Außenflächen 36 oder weist zumindest darauf hin, welche Außenflächen 36 zulässig sind, beispielsweise durch Farbgebung. Weitere Außenflächen 38 sind als ungültig markiert, beispielsweise rot oder grau dargestellt. Sie können nicht sicher von den 3D-Sensoren 10a-b überwacht werden, weil sie sicherheitskritische Verdeckungen oder Abschattungen erzeugen könnten. Der Einrichter kann die Konfiguration ändern, damit die Außenflächen 38 einsehbar werden, sei es durch Anpassung der Außenflächen 38, der Position und/oder Perspektive eines der 3D-Sensoren 10a-b oder Hinzufügen eines weiteren 3D-Sensors. Ansonsten sind die nicht einsehbaren Außenflächen 38 von der Überwachung ausgenommen und müssen anderweitig abgesichert werden, etwa mit einem Zaun oder einem Lichtgitter.

Figur 7 illustriert in einer Ansicht ähnlich Figur 6 einen beispielhaften Korrekturschritt einer nicht einsehbaren Außenfläche 38. Ein Teil 36a der Außenfläche 38 wird nach vorne hin umorientiert, dadurch für den 3D-Sensor 10a einsehbar und damit für die Überwachung zulässig.

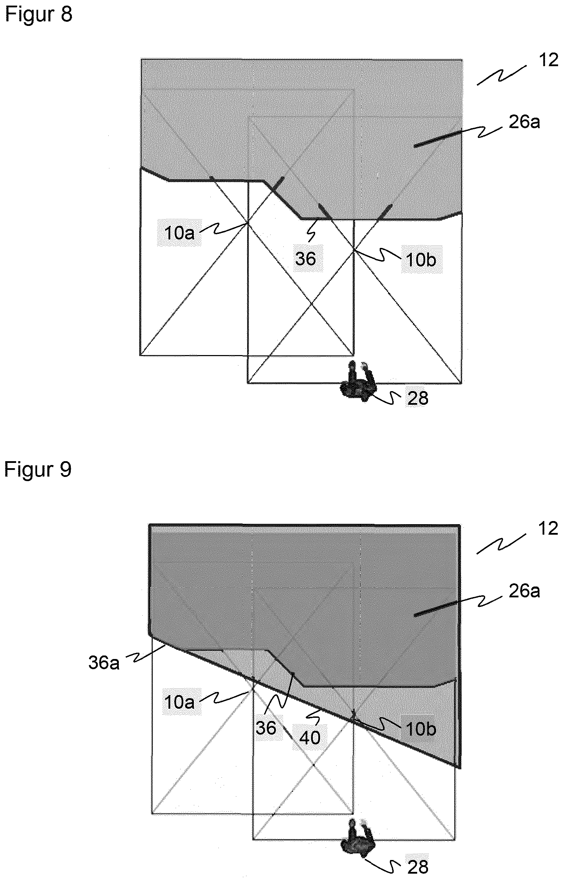

Figur 8 illustriert in einer Draufsicht auf die Situation der Figur 7 eine Ausführungsform der erfindungsgemäßen Konfiguration. In dieser Ausführungsform werden Gefahrenstellen 26a als Polygonzug in der Bodenebene konfiguriert und mit einer Höhe versehen. Daraus ergibt sich ein Prisma mit senkrechten Seitenflächen als Außenflächen. Der Polygonzug ist zunächst nicht eingeschränkt, sollte aber vorzugsweise nicht selbstüberschneidend sein, und kann beliebig viele Stützstellen umfassen, so dass auch komplexe Formgebungen möglich sind. Damit bestehen mehr Konfigurationsmöglichkeiten als bei an sich auch denkbaren geometrischen Primitiven wie Quadern, Zylindern oder Kugeln. Andererseits wären beliebige Meshes zwar noch flexibler, aber sowohl für deren Festlegung als auch für das Überprüfen und Nachvollziehen der Zulässigkeit im Sinne des genannten Einsehbarkeitskriteriums nur schwer handhabbar.
Allgemein, also auch für Gefahrenstellen 26a-b, die nicht als Prisma aus einem Polygonzug entstehen, ist eine Außenfläche der Gefahrenstelle 26a-b dann einsehbar, wenn die Verbindungslinie vom 3D-Sensor 10a-b zu jedem Punkt der Außenfläche keinen Punkt einer Gefahrenstelle 26a-b schneidet. Die Orientierung einer ebenen Außenfläche hin zum 3D-Sensor 10ab lässt sich mit einem Normalenvektor n der Außenfläche prüfen. Der Normalenvektor n zeigt immer von der Gefahrenstelle 26a-b nach außen. Für jeden beliebigen Strahl r vom 3D-Sensor 10 zu einem Punkt auf der zu prüfenden Außenfläche muss für das Skalarprodukt n · r ≤ 0 gelten. Der Verbindungsvektor r vom 3D-Sensor 10 auf die Fläche zeigt also immer in die Gegenrichtung zum Normalenvektor n.

Für die bevorzugte Ausführungsform mit Gefahrenstellen 26a-b, die als Prisma mit senkrechten Seitenflächen aus einem Polygonzug konfiguriert werden, lässt sich diese Überprüfung deutlich vereinfachen. Zunächst genügt wegen der senkrechten Seitenflächen eine 2D-Betrachtung in senkrechter Projektion auf die Grundfläche, wie in Figur 9 nochmals gezeigt. In dieser Projektion steht n senkrecht auf dem jeweils betrachteten Polygonsegment, und r verbindet die Projektion des optischen Zentrums des 3D-Sensors 10 mit einem beliebigen Punkt des Polygonsegments, etwa dessen Start-, End- oder Mittelpunkt. Die Bedingung an das Skalarprodukt bleibt n · r ≤ 0, nur dass es nun ein zweidimensionales Skalarprodukt der auf die Grundfläche projizierten Vektoren ist. Anschaulich bedeutet die Bedingung, dass der 3D-Sensor 10 bezüglich einer Halbebene 40, die in Figur 9 beispielhaft diejenige der Außenfläche 36a ist, jenseits der Gefahrenstelle 26a liegt. Diese Bedingung ist je Segment des Polygonzugs anhand entsprechender Halbebenen 40 zu überprüfen.

Die Überprüfung findet vorzugsweise bereits während der Konfiguration statt beziehungsweise es können nur gültige Polygonzüge eingerichtet werden. Damit ist keine Verdeckung hinter Gefahrenstellen 26a-b möglich. Diese Vorgehensweise der automatischen Kontrolle hat den Vorteil, dass nur gültige Konfigurationen erstellt werden und freigegeben werden können, zumindest in Hinsicht auf die Sichtbarkeit der Seitenflächen. Die automatische Überprüfung schließt somit diese Konfigurationsfehler aus.

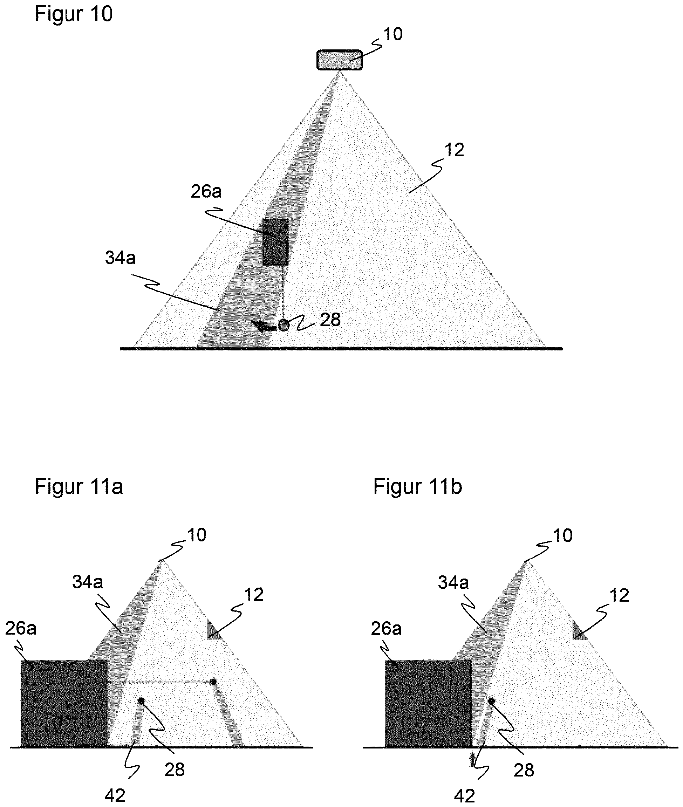

Figur 10 zeigt nochmals eine beispielhafte schematische Seitenansicht des Sichtbereichs eines 3D-Sensors 10. Eine denkbare Bedingung an Gefahrenstellen 26a-b ist, dass sie zwar eine beliebige Höhe haben dürfen, jedoch immer auf der Grundfläche beginnen müssen, wobei dies vorzugsweise in einem erweiterten Sinne gemeint ist und einen sicherheitstechnisch unbedenklichen Abstand von beispielsweise 300 mm zum Boden zulässt. Damit kann kein relevantes Objekt 28 unter einer Gefahrenstelle 26a-b verschwinden.

Soll dennoch eine schwebende Gefahrenstelle 26a konfigurierbar sein, wie in Figur 10 illustriert, so muss für die Bestimmung von kürzesten Abständen nicht nur die Gefahrenstelle 26a selbst, sondern auch deren Abschattungsbereich 34a berücksichtigt werden. Ansonsten könnte ein Objekt 28 wie dargestellt in noch relativ großem Abstand in den Abschattungsbereich 34a eintauchen und sich darin unbemerkt an die Gefahrenstelle 26a annähern. Für schwebende Gefahrenstellen 26a wird also davon abgewichen, dass es genügt, Abstände zur Gefahrenstelle 26a selbst zu berechnen, der Abschattungsbereich 34a ist vielmehr selbst als Teil der Gefahrenstelle 26a zu betrachten oder alternativ mittels eines weiteren Sensors abzusichern.

Schwebende Gefahrenstellen 26a sind daher oft nicht vorteilhaft. In der Situation der Figur 10 wäre es wohl für die meisten Anwendungen besser, die Gefahrenstelle 26a im Rahmen der Konfiguration senkrecht nach unten bis zum Boden zu ziehen, als sie faktisch über den Abschattungsbereich 34a schräg zu projizieren.

Bei diesen Überlegungen wird wie bisher von einer ebenen Grundfläche ausgegangen, in aller Regel dem Boden. Es ist aber auch denkbar, die Grundfläche auf eine andere Höhe zu legen beziehungsweise einen Referenzhintergrund zu bestimmen. Gefahrenstellen 26a-b beginnen dann nicht in der Bodenebene, sondern auf der jeweiligen Höhe des Referenzhintergrundes.

Bisher wurden die Abschattungsbereiche 34a hauptsächlich aus Sicht des 3D-Sensors 10 hinter einer Gefahrenstelle 26a betrachtet. Durch die Forderung objektfreier Gefahrenstellen 26a und deren Ausmaskieren bei der Objektdetektion entsteht aber auch zwischen Gefahrenstelle 26a und 3D-Sensor 10 eine Verdeckung als Teil des jeweiligen Verdeckungs- und Abschattungsbereichs 34a.

Bei senkrechten Seitenflächen einer Gefahrenstelle 26a, insbesondere einem Prisma mit senkrechten Seitenflächen, die zu mindestens einem 3D-Sensor 10a-b hin orientiert sind, ist das aber überraschenderweise nicht sicherheitskritisch, wie Figur 11a-b illustriert. Das Objekt 28 nähert sich an die Gefahrenstelle 26a an. Im selben Moment, in dem es in dem Abschattungsbereich 34a verschwinden würde, berührt auch sein projektiver Schatten 42, der ja vorsichtshalber dem Objekt 28 zugeschlagen wird, die Gefahrenstelle 26a. Die kritische Annäherung an den Abschattungsbereich 34a wird also immer implizit bemerkt, und es erfolgt rechtzeitig eine sicherheitsgerichtete Reaktion. Es ist deshalb gar nicht möglich, dass ein Objekt 28 in den Abschattungsbereich 34a eintritt.

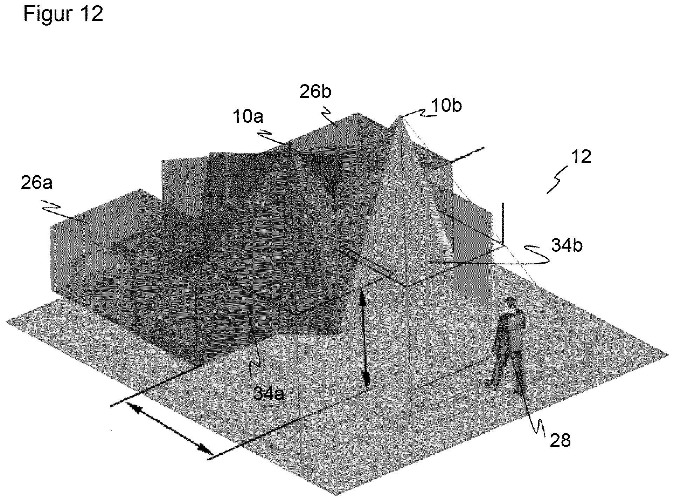

Figur 12 illustriert nochmals den Vorteil der erfindungsgemäßen Konfiguration. Anstatt auf die Einsehbarkeit von Außenflächen einer Gefahrenstelle 26a-b zu achten, wäre es immer möglich, die Gefahrenstellen 26a-b einfach projektiv zu ergänzen, ihnen also die gesamten Abschattungsbereiche 34a-b zuzuschlagen. Ein Vergleich von Figur 6 und 12 zeigt eindrücklich, wieviel größer dadurch das von Gefahrenstellen 26a-b eingenommene Volumen wird. Das bedeutet auch, dass die kürzesten Abstände zu Objekten 28 systematisch unterschätzt werden und so die Verfügbarkeit reduziert wird. Außerdem ist eine solche Gefahrenstelle 26a-b für den Einrichter schwer nachvollziehbar, und bei der späteren Berechnung ergeben sich komplexe Geometrien im Raum. Ähnliche Probleme ergeben sich, wenn Gefahrenstellen 26a-b direkt aus Tiefenkarten extrahiert werden.

Es ist denkbar, Gefahrenstellen 26a-b anhand der Arbeitsabläufe der Maschine 26 automatisch zu konfigurieren oder zumindest den Einrichter bei der Konfiguration anhand der Arbeitsabläufe zu unterstützen. Dazu wird die Maschine 26 über einen oder mehrere Arbeitsschritte von einem der 3D-Sensoren überwacht. Denkbar ist auch die Überwachung durch einen anderen 3D-Sensor, der die Maschine 26 aus einer besseren oder vollständigeren Perspektive sieht, oder mit ganz anderen Sensoren, etwa der eigenen Sensorik eines Roboters als Maschine 26. Danach sind dann die Raumbereiche bekannt, welche von der Maschine 26 zumindest zeitweise besetzt sind, und diese Information wird genutzt, um Gefahrenstellen 26a-b automatisch zu definieren, oder die Information wird eingeblendet, um dem Einrichter die ungefähr benötigte Gefahrenstelle 26a-b zu illustrieren. Es ist auch denkbar, Gefahrenstellen 26a-b automatisch vorzugeben und dann händisch nachzubearbeiten.

Konkret könnte der Ablauf zunächst die Aufnahme von 3D-Punktewolken der statischen Szene als Referenz und dann während der zu überwachenden Arbeitsschritte der Maschine 26 vorsehen, gegebenenfalls auch mehrfach. Daraus wird eine Art Vereinigungsmenge gebildet, und möglicherweise werden 3D-Punkte der Referenz ignoriert, die statisch und nicht Teil einer Gefahr sind. Auf Basis dieser 3D-Punktewolke wird ein 3D-Modell erstellt, insbesondere eine konvexe Hülle samt projektiver Verdeckung aus Sensorsicht. Alternativ oder kumulativ zu einer Berücksichtigung der Referenz schon auf Ebene der 3D-Punkte wird jeweils ein 3D-Modell für die Arbeitsschritte und die Referenz gebildet und das 3D-Modell so bereinigt.

Das entstehende 3D-Modell bezeichnet ein Raumvolumen sämtlicher von bewegten Teilen der Maschine 26 eingenommener Punkte. Es wird anschließend automatisch und/oder in händischer Nachbearbeitung zu einer zulässigen Gefahrenstelle 26a-b erweitert, in der alle Außenflächen durch mindestens einen 3D-Sensor 10a-b einsehbar sind. Insbesondere ist denkbar, dazu eine 2D-Projektion der 3D-Punktewolke zu betrachten und einen begrenzenden Polygonzug zu definieren, entsprechend der zu Figur 8 beschriebenen bevorzugten Konfiguration.

## Patentansprüche

1. Verfahren zum Konfigurieren mindestens einer von mindestens einem 3D-Sensor (10, 10a-b) zu überwachenden Gefahrenstelle (26a-b), wobei die Konfiguration mit Hilfe einer Software erfolgt und wobei die Gefahrenstelle (26a-b) ein durch Außenflächen (36, 38) definiertes Volumen zum Absichern mindestens einer Maschine (26) ist, das die Maschine (26) modelliert, und wobei durch das Konfigurieren die Außenflächen (36, 38) festlegt werden,
**dadurch gekennzeichnet,**
**dass** während des Konfigurierens oder nach dem Konfigurieren automatisch geprüft wird, ob Außenflächen (36, 38) von mindestens einem der 3D-Sensoren (10, 10a-b) eingesehen werden, damit mit der konfigurierten Gefahrenstelle (32) Sicherheitsprobleme durch Verdeckung oder Abschattung von vorneherein vermieden werden, indem der Einrichter automatisch unterstützt wird und keine in diesem Sinne unzulässigen Gefahrenstellen (32) konfigurieren kann oder zumindest einen Hinweis auf mögliche Sicherheitsprobleme erhält, wobei eine Außenfläche von einem 3D-Sensor (10, 10a-b) eingesehen werden kann, wenn die Verbindungslinie vom 3D-Sensor (10, 10a-b) zu jedem Punkt der Außenfläche keinen Punkt einer Gefahrenstelle (26a-b) schneidet.

2. Verfahren nach Anspruch 1,
wobei zum Konfigurieren von Außenflächen (36, 38) mindestens ein Polygonzug auf einer Grundfläche vorgegeben und daraus ein Prisma mit senkrechten Außenflächen (36, 38) erzeugt wird.

3. Verfahren nach Anspruch 1 oder 2,
wobei eine Außenfläche (36) von einem 3D-Sensor (10, 10a-b) eingesehen werden kann, wenn der 3D-Sensor (10, 10a-b) bezüglich der Ebene (40), in der die Außenfläche (36) liegt, jenseits der Gefahrenstelle (26a-b) angeordnet ist.

4. Verfahren nach einem der vorhergehenden Ansprüche,
wobei Gefahrenstellen (26a-b) nur mit Kontakt zum Boden konfiguriert werden dürfen oder, soweit doch schwebende Gefahrenstellen (26a-b) zugelassen werden, der Gefahrenstelle (26a-b) deren projektiver Abschattungsbereich (34a-b) zugeschlagen wird.

5. Verfahren nach einem der vorhergehenden Ansprüche,
wobei eine Außenfläche (38), die nicht von mindestens einem 3D-Sensor (10, 10a-b) eingesehen wird, während des Konfigurierens gekennzeichnet oder gar nicht zugelassen wird.

6. Verfahren nach einem der vorhergehenden Ansprüche,
wobei beim Konfigurieren einer nicht von mindestens einem 3D-Sensor (10, 10a-b) eingesehenen Außenfläche (38) automatisch eine alternative Außenfläche (36) vorgeschlagen wird.

7. Verfahren nach einem der vorhergehenden Ansprüche,
wobei beim Konfigurieren einer nicht von mindestens einem 3D-Sensor (10, 10a-b) eingesehenen Außenfläche (38) automatisch eine veränderte Perspektive eines 3D-Sensors (10, 10a-b) oder eine Perspektive eines zusätzlichen 3D-Sensors (10, 10a-b) vorgeschlagen wird, damit die Außenfläche (36) dann eingesehen wird.

8. Verfahren nach einem der vorhergehenden Ansprüche,
wobei die Maschine (26) während ihrer Arbeitsbewegung beobachtet wird, um von der Gefahrenstelle (26a-b) zu umfassende Raumbereiche aufzufinden.

9. Verfahren nach Anspruch 8,
wobei die zu umfassenden Raumbereiche als Hilfestellung zum Konfigurieren der Gefahrenstelle (26a-b) dargestellt werden.

10. Verfahren nach Anspruch 8 oder 9,
wobei anhand der zu umfassenden Raumbereiche automatisch eine Gefahrenstelle (26a-b) konfiguriert wird.

11. Verfahren nach einem der vorhergehenden Ansprüche,
wobei die mindestens eine konfigurierte Gefahrenstelle (26a-b) von dem mindestens einen 3D-Sensor (10, 10a-b) überwacht wird, wobei aus Messdaten des 3D-Sensors (10, 10a-b) Objekte (28) in einer Umgebung der Gefahrenstelle (26a-b) erfasst werden, der kürzeste Abstand zwischen Gefahrenstelle (26a-b) und Objekten (28) bestimmt und mit dessen Hilfe entschieden wird, ob eine sicherheitsgerichtete Reaktion der Maschine (26) in der Gefahrenstelle (26a-b) erfolgt.

12. Verfahren nach Anspruch 11,
wobei der kürzeste Abstand zu den Außenflächen (36) bestimmt wird, ohne den projektiven Abschattungsbereich (34a-b) der Gefahrenstelle (26a-b) zu berücksichtigen.

13. Verfahren nach Anspruch 11 oder 12,
wobei bei der Überwachung der Gefahrenstelle (26a-b) Objekte in der Gefahrenstelle (26a-b) selbst und in einem Verdeckungsbereich (34a-b) zwischen Gefahrenstelle (26a-b) und 3D-Sensor (10, 10a-b) ignoriert werden.

14. Vorrichtung zum Konfigurieren mindestens einer von mindestens einem 3D-Sensor (10, 10a-b) zu überwachenden Gefahrenstelle (26a-b), wobei die Gefahrenstelle (26a-b) ein durch Außenflächen (36, 38) definiertes Volumen zum Absichern mindestens einer Maschine (26) ist, das die Maschine (26) modelliert und wobei die Vorrichtung eine Eingabeeinrichtung, eine Steuer- und Auswertungseinheit sowie eine Anzeige aufweist, wobei die Steuer- und Auswertungseinheit dafür ausgebildet ist, aufgrund von Eingaben der Eingabeeinrichtung Außenflächen (36, 38) der Gefahrenstelle (26a-b) festzulegen und auf der Anzeige darzustellen, um die Gefahrenstelle (26a-b) mit einem Verfahren nach einem der Ansprüche 1 bis 10 zu konfigurieren.

## Claims

1. A method for the configuration of at least one hazardous zone (26a-b) to be monitored by at least one 3D sensor (10, 10a-b), wherein the configuration is performed with the aid of software and wherein the hazardous zone (26a-b) is a volume defined by outer surfaces (36, 38) for safeguarding at least one machine (26) that models the machine (26), and wherein the outer surfaces (36, 38) are defined by the configuration,
**characterized in that** during the configuration or after the configuration it is automatically checked whether external surfaces (36, 38) are seen by at least one of the 3D sensors (10, 10a-b), so that with the configured hazardous zone (32) safety problems due to occlusion or shadowing are avoided from the outset **in that** the configuring user is automatically assisted and cannot configure hazardous zones (32) which are inadmissible in this sense or at least receives an indication of possible safety problems, wherein an outer surface can be seen by a 3D sensor (10, 10a-b) if the connecting line from the 3D sensor (10, 10a-b) to each point of the outer surface does not intersect a point of a hazardous zone (26a-b).

2. The method according to claim 1,
wherein for configuring outer surfaces (36, 38) at least one polygon is specified on a base surface and a prism with perpendicular outer surfaces (36, 38) is generated therefrom.

3. The method according to claim 1 or 2,
wherein an outer surface (36) can be seen by a 3D sensor (10, 10a-b) when the 3D sensor (10, 10a-b) is positioned beyond the hazardous zone (26a-b) with respect to the plane (40) in which the outer surface (36) lies.

4. The method according to any of the preceding claims,
wherein hazardous zones (26a-b) may only be configured with contact to the ground or, insofar as floating hazardous zones (26a-b) are nevertheless permitted, their projective shadowing area (34a-b) is added to the hazardous zone (26a-b).

5. The method according to any of the preceding claims,
wherein an outer surface (38) not seen by at least one 3D sensor (10, 10a-b) is flagged or not allowed at all during configuration.

6. The method according to any of the preceding claims,
wherein when configuring an outer surface (38) not seen by at least one 3D sensor (10, 10a-b), an alternative outer surface (36) is automatically proposed.

7. The method according to any of the preceding claims,
wherein when configuring an outer surface (38) not seen by at least one 3D sensor (10, 10a-b), a modified perspective of a 3D sensor (10, 10a-b) or a perspective of an additional 3D sensor (10, 10a-b) is automatically proposed so that the outer surface (36) is then seen.

8. The method according to any of the preceding claims,
wherein the machine (26) is observed during its working movement in order to locate spatial areas to be encompassed by the hazardous zone (26a-b).

9. The method according to claim 8,
wherein the spatial areas to be encompassed are shown to assist in configuring the hazardous zone (26a-b).

10. The method according to claim 8 or 9,
wherein a hazardous zone (26a-b) is automatically configured based on the spatial areas to be encompassed.

11. The method according to any of the preceding claims,
wherein the at least one configured hazardous zone (26a-b) is monitored by the at least one 3D sensor (10, 10a-b), wherein objects (28) in a vicinity of the hazardous zone (26a-b) are detected from measurement data of the 3D sensor (10, 10a-b), the shortest distance between hazardous zone (26a-b) and objects (28) is determined, and with the aid of this distance it is decided whether a safety-related reaction of the machine (26) in the hazardous zone (26a-b) takes place.

12. The method according to claim 11,
wherein the shortest distance to the outer surfaces (36) is determined without taking into account the projective shadowing area (34a-b) of the hazardous zone (26a-b).

13. The method according to claim 11 or 12,
wherein, when monitoring the hazardous zone (26a-b), objects in the hazardous zone (26a-b) itself and in an occlusion area (34a-b) between the hazardous zone (26a-b) and the 3D sensor (10, 10a-b) are ignored.

14. An apparatus for configuring at least one hazardous zone (26a-b) to be monitored by at least one 3D sensor (10, 10a-b),wherein the hazardous zone (26a-b) is a volume defined by outer surfaces (36, 38) for safeguarding at least one machine (26) that models the machine (26), and wherein the apparatus has an input device, a control and evaluation unit and a display, wherein the control and evaluation unit is configured to define outer surfaces (36, 38) of the hazardous zone (26a-b) on the basis of inputs from the input device and to display them on the display in order to configure the hazardous zone (26a-b) using a method according to any of claims 1 to 10.

## Revendications

1. Procédé pour configurer au moins un emplacement de danger (26a-b) à surveiller par au moins un capteur 3D (10, 10a-b), dans lequel la configuration se fait à l'aide d'un logiciel, et l'emplacement de danger (26a-b) est un volume qui est défini par des surfaces extérieures (36, 38) pour sécuriser au moins une machine (26) et qui modélise la machine (26), et les surfaces extérieures (36, 38) sont spécifiées par la configuration,
**caractérisé en ce que**
pendant la configuration ou après la configuration, on vérifie automatiquement si des surfaces extérieures (36, 38) sont vues par l'un au moins des capteurs 3D (10, 10a-b), de manière à éviter d'emblée, grâce à l'emplacement de danger configuré (32), les problèmes de sécurité dus à l'occultation ou à l'ombrage, du fait que l'installateur est assisté automatiquement et ne peut pas configurer d'emplacements de danger inadmissibles en ce sens, ou reçoit au moins une information relative à des problèmes de sécurité possibles, une surface extérieure pouvant être vue par un capteur 3D (10, 10a-b) si la ligne de liaison du capteur 3D (10, 10a-b) à un point quelconque de la surface extérieure ne coupe aucun point d'un emplacement de danger.

2. Procédé selon la revendication 1,
dans lequel, pour configurer les surfaces extérieures (36, 38), au moins un tracé polygonal est prédéterminé sur une surface de base, et un prisme avec des surfaces extérieures verticales (36, 38) est généré à partir de celui-ci.

3. Procédé selon la revendication 1 ou 2,
dans lequel une surface extérieure (36) peut être vue par un capteur 3D (10, 10a-b) lorsque le capteur 3D (10, 10a-b) est positionné au-delà de l'emplacement de danger (26a-b) par rapport au plan (40) dans lequel se situe la surface extérieure (36).

4. Procédé selon l'une des revendications précédentes,
dans lequel les emplacements de danger (26a-b) ne peuvent être configurés qu'en contact avec le sol ou, dans la mesure où des emplacements de danger (26a-b) suspendus sont néanmoins autorisés, leur zone d'ombre projective (34a-b) est ajoutée à l'emplacement de danger (26a-b).

5. Procédé selon l'une des revendications précédentes,
dans lequel une surface extérieure (38) qui n'est pas vue par au moins un capteur 3D (10, 10a-b) est marquée pendant la configuration ou n'est pas autorisée du tout.

6. Procédé selon l'une des revendications précédentes,
dans lequel, lors de la configuration d'une surface extérieure (38) qui n'est pas vue par au moins un capteur 3D (10, 10a-b), une surface extérieure alternative (36) est suggérée automatiquement.

7. Procédé selon l'une des revendications précédentes,
dans lequel, lors de la configuration d'une surface extérieure (38) qui n'est pas vue par au moins un capteur 3D (10, 10a-b), une perspective modifiée d'un capteur 3D (10, 10a-b) ou une perspective d'un capteur 3D supplémentaire (10, 10a-b) est suggérée automatiquement pour que la surface extérieure (36) soit alors vue.

8. Procédé selon l'une des revendications précédentes,
dans lequel la machine (26) est observée pendant son mouvement de travail afin de localiser les zones d'espace à englober par l'emplacement de danger (26a-b).

9. Procédé selon la revendication 8,
dans lequel les zones d'espace à englober sont représentées comme une aide à la configuration de l'emplacement de danger (26a-b).

10. Procédé selon la revendication 8 ou 9,
dans lequel un emplacement de danger (26a-b) est configuré automatiquement sur la base des zones d'espace à englober.

11. Procédé selon l'une des revendications précédentes,
dans lequel ledit au moins un emplacement de danger configuré (26a-b) est surveillé par ledit au moins un capteur 3D (10, 10a-b), des objets (28) à proximité de l'emplacement de danger (26a-b) sont détectés à partir de données de mesure du capteur 3D (10, 10a-b), la distance la plus courte entre l'emplacement de danger (26a-b) et les objets (28) est déterminée, et il est décidé à l'aide de cette distance si une réaction de sécurité de la machine (26) a lieu à l'emplacement de danger (26a-b).

12. Procédé selon la revendication 11,
dans lequel la distance la plus courte aux surfaces extérieures (36) est déterminée sans tenir compte de la zone d'ombre projective (34a-b) de l'emplacement de danger (26a-b).

13. Procédé selon la revendication 11 ou 12,
dans lequel, lors de la surveillance de l'emplacement de danger (26a-b), les objets à l'emplacement de danger (26a-b) lui-même et dans une zone d'occlusion (34a-b) entre l'emplacement de danger (26a-b) et le capteur 3D (10, 10a-b) sont ignorés.

14. Dispositif pour configurer au moins un emplacement de danger (26a-b) à surveiller par au moins un capteur 3D (10, 10a-b), dans lequel l'emplacement de danger (26a-b) est un volume qui est défini par des surfaces extérieures (36, 38) pour sécuriser au moins une machine (26) et qui modélise la machine (26), et le dispositif comprend un moyen d'entrée, une unité de commande et d'évaluation et un écran d'affichage, l'unité de commande et d'évaluation étant réalisée pour spécifier des surfaces extérieures (36, 38) de l'emplacement de danger (26a-b) sur la base des entrées du moyen d'entrée, et pour les représenter sur l'écran d'affichage afin de configurer l'emplacement de danger (26a-b) par un procédé selon l'une des revendications 1 à 10.
